# EUROPEAN PATENT APPLICATION

(11) **EP 2 902 814 A2**
(43) Date of publication of application: **05.08.2015**
(21) Application number: 15153855.0
(22) Date of filing: 04.02.2015
(51) Int. Cl.: G01V 11/00

(54) **Well-logging system with data synchronization and methods**

(30) Priority: 04.02.2014 US 201414172473
(71) Applicant: Services Petroliers Schlumberger, 75007 Paris (FR); Schlumberger Holdings Limited, Tortola 1110 (VG); SCHLUMBERGER TECHNOLOGY B.V., 2514 JG Den Haag (NL)
(72) Inventor: Narasimhan, Bharat, Houston, TX 77077 (US); Fredette, Mark A., Houston, TX 77035 (US); Gadot, Raphael, Sugar Land TX 77478 (US); Hutin, Remi, New Ulm, TX 78950 (US); Conn, David Kirk, Houston, TX 77079 (US)
(74) Representative: Li, Boxi

(57) **Abstract**

A well-logging system may include a tool assembly to be positioned within a borehole of a subterranean formation and to store second data including a second time marker related to a first time marker. The well-logging system may include a controller above the subterranean formation. The controller may process first data including the first time marker, recover the second data, and synchronize the second data based upon the second time marker and the first time marker.

## Description

### Background

Logging while drilling (LWD) techniques for determining numerous borehole and formation characteristics are well known in oil drilling and production applications. Such logging techniques include, for example, gamma ray, spectral density, neutron density, inductive and galvanic resistivity, micro-resistivity, acoustic velocity, acoustic caliper, physical caliper, downhole pressure measurements, and the like. Formations having recoverable hydrocarbons may include certain well-known physical properties, for example, resistivity, porosity (density), and acoustic velocity values in a certain range. Such LWD measurements are commonly used, for example, in making steering decisions for subsequent drilling of the borehole.

The introduction of the wired pipe networks into the oil and gas drilling industry allows downhole clocks to be continuously synchronized with top hole clock sources. However, there are instances where the tool string may be disconnected from the surface, such as when adding or removing pipe during drilling or tripping and other instances which breaks communication between the top-hole and downhole clocks. During these breaks, timing accuracy of any LWD recordings taken downhole may be inaccurate since the downhole clocks may drift.

### Summary

This summary is provided to introduce a selection of concepts that are further described below in the detailed description. This summary is not intended to identify key or essential features of the claimed subject matter, nor is it intended to be used as an aid in limiting the scope of the claimed subject matter.

A well-logging system may include a tool assembly to be positioned within a borehole of a subterranean formation and to store second data including a second time marker related to a first time marker. The well-logging system may include a controller above the subterranean formation. The controller may process first data including the first time marker, recover the second data, and synchronize the second data based upon the second time marker and the first time marker.

### Brief Description of the Drawings

FIG. 1 is a schematic diagram of a well site system which may be used for implementation of an example embodiment.
FIG. 2 is a schematic diagram of a well-logging system, according to an example embodiment.
FIG. 3 is a flowchart illustrating operation of an example embodiment of the well-logging system.
FIG. 4 is a diagram illustrating time synchronization of the first and second data in an example embodiment of the well-logging system.

### Detailed Description

The present embodiments will now be described more fully hereinafter with reference to the accompanying drawings, in which some embodiments of the present disclosure are shown. This present disclosure may, however, be embodied in many different forms and should not be construed as limited to the embodiments set forth herein. Rather, these embodiments are provided so that this disclosure will be thorough and complete, and will fully convey the scope of the present disclosure to those skilled in the art. Like numbers refer to like elements throughout.

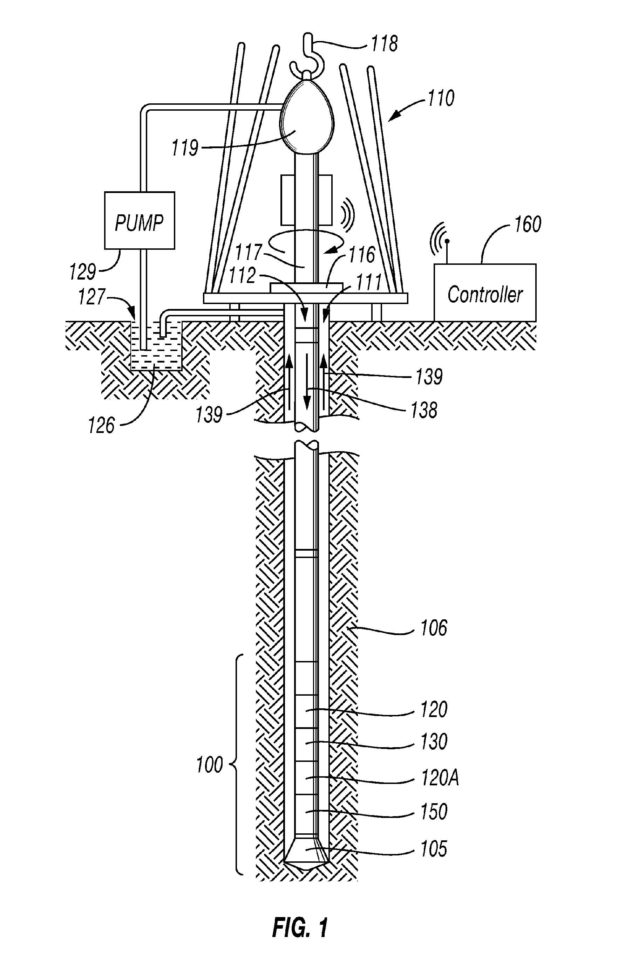

Referring initially to FIG. 1, a well site system which may be used for implementation of the example embodiments set forth herein is first described. The well site may be onshore or offshore. In this illustrated system, a borehole **111** is formed in a subterranean formation **106** by rotary drilling. Embodiments of the disclosure may also use directional drilling, for example.

A drill string **112** is suspended within the borehole **111** and has a tool assembly **100** which includes a drill bit **105** at its lower end. The surface system includes a platform and derrick assembly **110** positioned over the borehole **111,** the assembly **110** including a rotary table **116,** Kelly **117,** hook **118** and rotary swivel **119.** The drill string **112** is rotated by the rotary table **116,** which engages the Kelly **117** at the upper end of the drill string. The drill string **112** is suspended from a hook **118,** attached to a traveling block (not shown), through the Kelly **117** and a rotary swivel **119** which permits rotation of the drill string relative to the hook. A top drive system may also be used in some embodiments.

In the illustrated embodiment, the surface system further includes drilling fluid or mud **126** stored in a pit **127** formed at the well site. A pump **129** delivers the drilling fluid **126** to the interior of the drill string **112** via a port in the swivel **119,** causing the drilling fluid to flow downwardly through the drill string **112** as indicated by the directional arrow **138.** The drilling fluid exits the drill string **112** via ports in the drill bit **105,** and then circulates upwardly through the annulus region between the outside of the drill string and the wall of the borehole **111,** as indicated by the directional arrows **139.** The drilling fluid lubricates the drill bit **105** and carries subterranean formation **106** cuttings up to the surface as it is returned to the pit **127** for recirculation.

In various embodiments, the systems and methods disclosed herein may be used with other conveyance approaches known to those of ordinary skill in the art. For example, the systems and methods disclosed herein may be used with tools or other electronics conveyed by wireline, slickline, drill pipe conveyance, coiled tubing drilling, and/or a while-drilling conveyance interface. For the purpose of an example, FIG. 1 shows a while-drilling interface. However, systems and methods disclosed herein could apply equally to wireline or other suitable conveyance platforms. The tool assembly **100** of the illustrated embodiment includes a LWD device **120,** a measuring-while-drilling (MWD) device **130,** a rotary-steerable system and motor, and drill bit **105.**

The LWD device **120** is housed in a drill collar and may include one or a more types of logging tools. It will also be understood that more than one LWD and/or MWD device may be used, e.g. as represented at **120A, 150.** (References, throughout, to a device at the position of **120** may alternatively mean a module/device at the position of **120A** as well.) The LWD device may include capabilities for measuring, processing, and storing information, as well as for communicating with the surface equipment, such as the illustrated controller **160,** such as a logging and control station. By way of example, the LWD device may include one or more of an electromagnetic device, acoustic device, nuclear magnetic resonance device, nuclear measurement device (e.g. gamma ray, density, photoelectric factor, sigma thermal neutron capture cross-section, neutron porosity), etc., although other measurement devices may also be used.

The MWD device **130** is also housed in a drill collar and may include one or more devices for measuring characteristics of the drill string and drill bit. The MWD tool may further include an apparatus for generating electrical power to the downhole system (not shown). This may include a mud turbine generator powered by the flow of the drilling fluid, it being understood that other power and/or battery systems may be employed. The MWD device may also include one or more of the following types of measuring devices: a weight-on-bit measuring device, a torque measuring device, a shock and vibration measuring device, a temperature measuring device, a pressure measuring device, a rotations-per-minute measuring device, a mud flow rate measuring device, a direction measuring device, and an inclination measuring device.

The above-described borehole tools may be used for collecting measurements of the geological formation adjacent the borehole **111** to determine one or more characteristics of the fluids being displaced within the subterranean formation **106** in accordance with example embodiments. The system **110** may include a processor **170** for determining such characteristics. The processor **170** may be implemented using a combination of hardware (e.g., microprocessor, etc.) and a non-transitory medium having computer-executable instructions for performing the various operations described herein. It should be noted that the processor **170** may be located at the well site, or it may be remotely located.

By way of background, one of the objectives of formation evaluation (FE) is formation volumetrics, i.e., the quantification of the percentage volumetric fraction of each constituent present in a given sample of formation under study. At the heart of formation volumetrics is the identification of the constituents present, and the corresponding geological model. The constituents are assigned a signature on different log measurements, and log measurements selected may be optimized to ensure a unique signature per the constituents present. In general, practical considerations such as technology, operating conditions (well geometry, hole size, mud-type, open vs. cased hole, temperature, etc.,), HSE aspects, and economics may restrict the log measurements contemplated. Moreover, homogeneous medium mixing laws are selected based on the intrinsic physics of measurements selected, and three-dimensional geometrical response functions are selected based on the specific tool type and design carrying out the measurement. The individual constituents forward model responses have to be calibrated before the log measurements may be converted into elemental volumetric fractions.

In particular, the operations of identifying and assigning a log signature to the different constituents present (at in-situ conditions) may be a challenge, especially when working with wireline logs with relatively shallow depth of investigation, in the presence of relatively deep depth of invasion (in the case of conventional over-balance drilling). However, whereas identifying the different constituents present may be remedied to some extent through various operations, assigning a unique signature to the different constituents present may be problematic. This may be due to several factors.

For example, the analysis of rock cuttings brought back to the surface during the drilling process and/or mud logging operations may generally provide geologists and petrophysicists with early clues ("ground truth") as to the identity of the different constituents present, with certain exceptions (depending on mud type). Optional coring operations (which may potentially be costly and impractical) go a step further, to cut and retrieve many feet of formation whole core for further detailed analysis on surface. Downhole advanced elemental spectroscopy logging techniques (e.g., thermal neutron capture spectroscopy logs, fast neutron inelastic scattering spectroscopy logs, elemental neutron activation spectroscopy logs, etc.) may help account for the matrix constituents, and reduce the formation volumetrics challenge down to just fluid elemental volumetric fractions.

Furthermore, optional formation testing operations (e.g., pressure gradients, downhole fluid analysis, fluid sampling, etc.), despite the limited availability of such station data at discrete depth points, may be considered to test the producible fluid constituents of the formation. Recently introduced advanced multi-dimensional NMR logging techniques may help tell different fluid constituents apart from each other. Another factor may be that LWD measurements may be acquired prior to invasion having already progressed too deep inside the formation. Still another factor may be under-balance drilling.

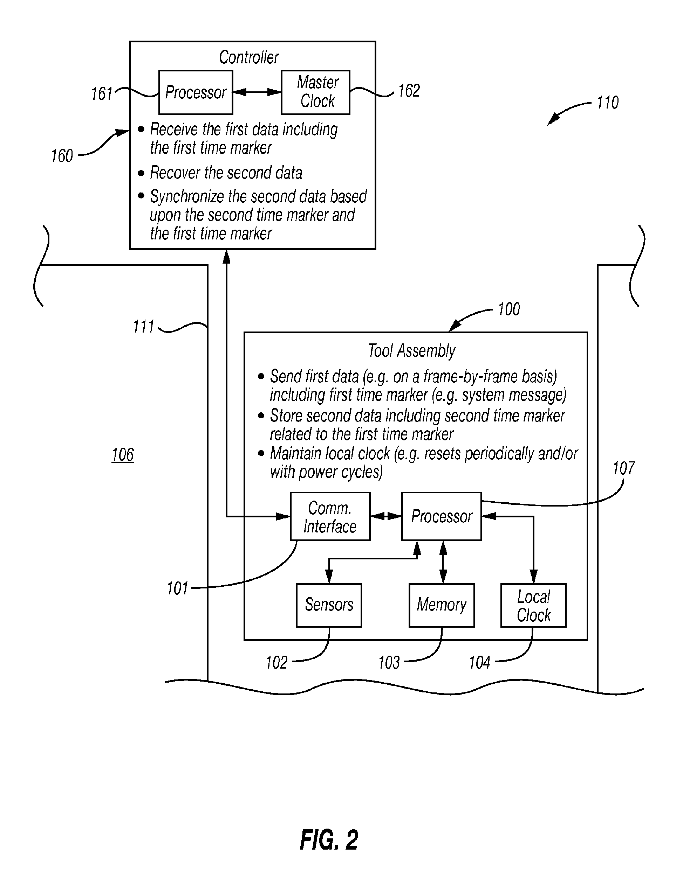

Referring now additionally to FIG. 2, a well-logging system **110** according to the present disclosure is now described. The well-logging system **110** illustratively includes a tool assembly 100 to be positioned within a borehole **111** of a subterranean formation **106,** and a controller **160** above the subterranean formation.

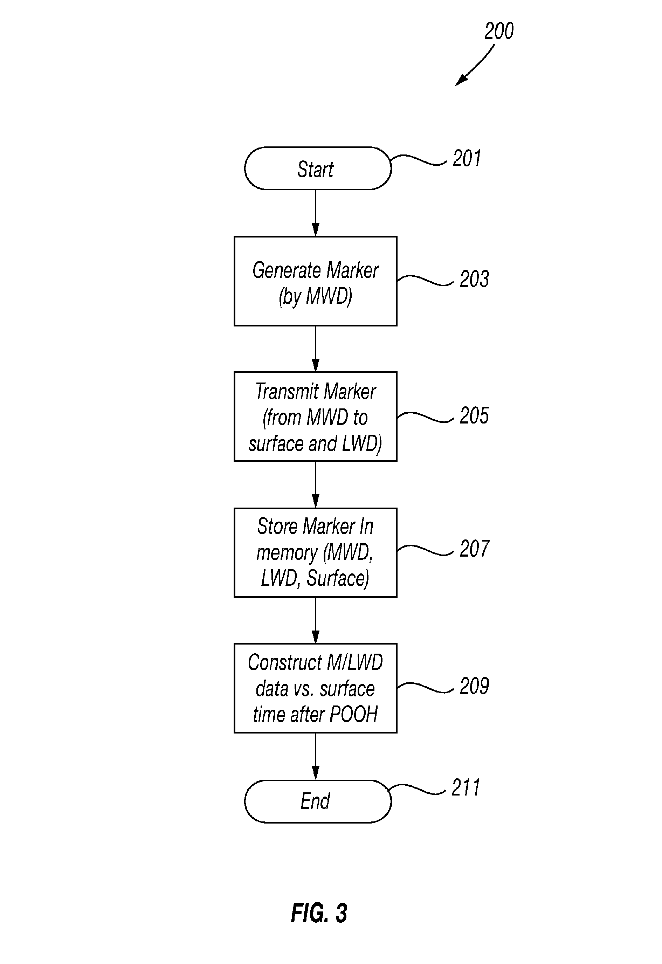

The tool assembly **100** illustratively includes a processor **107,** and a communications interface **101** coupled to the processor. The communications interface **101** may be in communication with the controller **160** (e.g. via a mudpulse connection). The tool assembly **100** illustratively includes a plurality of sensors (e.g. LWD sensors) **102** coupled to the processor **107** for determining at least one characteristic of the subterranean formation **106,** a memory **103** (e.g. non-volatile memory) coupled to the processor, and a local clock **104** coupled to the processor. In some embodiments (FIGS. 1 and 3), the tool assembly **100** may include a LWD device, and a MWD device coupled thereto.

The controller **160** illustratively includes a processor **161,** and a master clock **162** coupled thereto. The master clock **162** may comprise an actual/real time clock. Since the controller **160** is above surface and routinely powered indefinitely, the master clock **162** may be accurate and experience little time drift.

During operation, the tool assembly **100** may be periodically power cycled. In particular, since the tool assembly **100** may be in the borehole **111** for lengthy periods of time (e.g. several months), it may not be practical to maintain the tool assembly **100** in a powered state.

In some embodiments, while powered, the tool assembly **100** may generate first data and send the first data to the controller **160.** For example, the first data may comprise basic telemetry data (e.g. location data, bearing data, geo-steering data, etc.) for the tool assembly **160.** Also, the tool assembly **100** may generate second data, the second data being associated with adjacent portions of the subterranean formation **106,** diagnostics, or environmental conditions. More specifically, the second data may comprise the at least one characteristic (i.e. LWD measurements) of the subterranean formation **106.**

Also, the second data may be greater in size than the first data. Hence, the memory **103** of the tool assembly **100** may store the second data, and the local clock **104** may be used for correlating the second data with local time values, i.e. time stamping the second data. During the aforementioned power cycles of the tool assembly **100,** the local clock may be reset. In other words, the local clock may be reset periodically as the drill string including the tool assembly **100** may be shut down for various reasons (e.g. when adding pieces of piping to the drill string). Since the second data is time stamped using the local clock, it may be helpful for this local clock be accurate to actual time.

Within the first data, the tool assembly **100** inserts at least one first time marker therein. The tool assembly **100** may send the at least one first time marker during a power-up procedure, for example. In some embodiments, the tool assembly **100** may delay transmission of the at least one first time marker by a set timeout period. Additionally, the tool assembly **100** may send the at least one first time marker on a frame-by-frame basis. In some embodiments, the tool assembly **100** may send the at least one first time marker based upon a set frequency, such as 10 Hz.

In some embodiments, the at least one first time marker may comprise a periodic system message, such as an error check message, for example, a Cyclic redundancy check (CRC) message. In other embodiments, the at least one first time marker may comprise a frame sync message, a LWD data message, an Orion database data point, pump on and off event messages, and other pump event messages. Indeed, the at least one first time marker can comprise any system message sent to the controller **160** on a regular basis. In these embodiments, the tool assembly **100** does not send a specific message including the at least one first time marker, but rather the controller **160** derives the at least one first time marker from routine data transmitted from the tool assembly using a pre-established periodic system message. Generally, the at least one first time marker may comprise any known multi-bit data point, so long as the controller **160** may readily recognize the at least one first time marker within the first data.

Accordingly, in the illustrated embodiment, the tool assembly **100** may send the first data including the at least one first time marker to the controller **160.** Moreover, the tool assembly **100** may store, in the memory **103,** the second data including at least one second time marker related to the at least one first time marker. The tool assembly **100** may generate a second time value, i.e. a local time value (e.g. relative to the last power cycle when the tool assembly local clock was reset), when the at least one first time marker is sent and using the local clock. The tool assembly **100** may store the second time value along with the second data within the memory **103.**

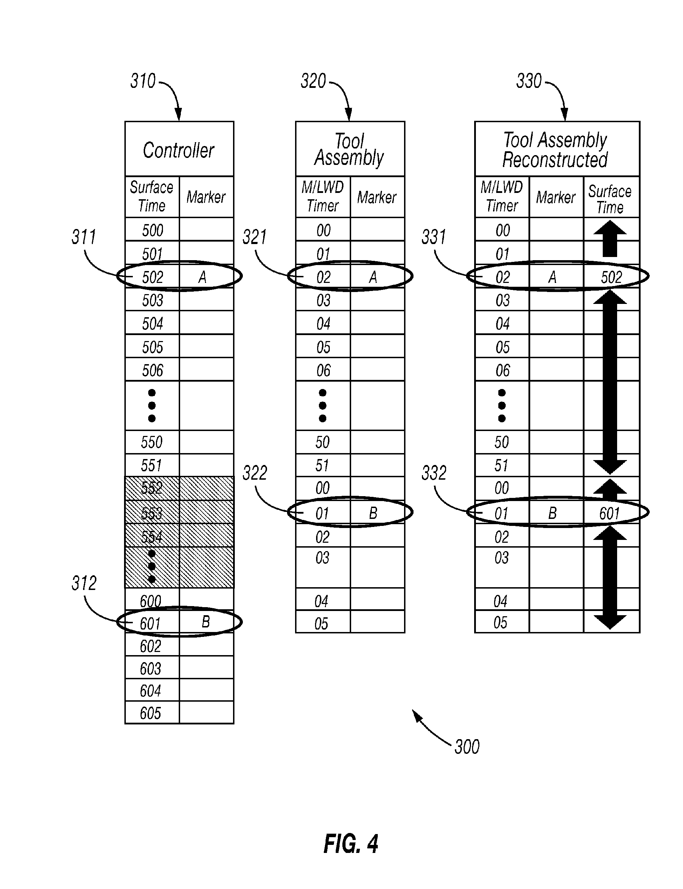

For example, as in the illustrated embodiment of FIG. 4, the at least one first time marker and the at least one second time marker may be contemporaneously inserted respectively into the first and second data. In other embodiments, they may be time aligned or perhaps have a fixed time offset.

The controller **160** may receive the first data including the at least one first time marker. Once the at least one first time marker is received, the controller **160** may generate a first time value (i.e. a true time value) using the master clock **162** and associate it with the at least one first time marker. The controller **160** may subsequently recover the second data. For example, the controller **160** may recover the second data stored in the tool assembly **100** when the drill string is removed from the borehole **111.**

In embodiments (FIGS. 1 and 3) of the tool assembly **100** that comprise separate MWD and LWD devices. The MWD device may send the at least one first time marker to the LWD device and the controller **160,** and the LWD device may generate and store the second data.

The controller **160** synchronizes the second data based upon the at least one second time marker and the at least one first time marker. In particular, the controller **160** may synchronize the second data by time aligning the first time value with the second time value. For example, in embodiments where the at least one first and second time markers are generated contemporaneously (FIG. 4), the controller **160** may replace the second time value with the first time value within the second data. Hence, the controller **160** may be able to accurately associate the second data with corresponding actual time values without providing the tool assembly **100** with a constant power source and accurate local clock, such as by providing a Lithium Thionyl Chloride battery, which may be expensive to use due to safety, maintenance, and disposal. Also, the well-logging system **110** may enable recorded mode logs for tools rated to ultra high temperatures (i.e. where battery approaches may be problematic), improve safety, and reduce manufacturing and maintenance costs.

In some embodiments, the controller **160** may determine the at least one first time marker without direct communication with the tool assembly **100.** For example, the controller **160** may determine the at least one first time marker based upon a pre-established commonly-detected event, such as a wellbore pressure value, internal pressure value, annular pressure value, flow rate value, acceleration value, collar RPM value, etc. When the commonly-detected event occurs and is detected independently at the controller **160** and the tool assembly **100,** the controller generates the at least one first time marker in the first data, and the tool assembly generates the at least one second time marker in the second data.

Referring now to FIG. 3, with reference to flowchart **200,** a method for well-logging is described (Block **201**). The method may include positioning a tool assembly **100** within a borehole **111** of a subterranean formation **106,** and using the tool assembly to send first data including at least one first time marker, and store second data including at least one second time marker related to the at least one first time marker. (Blocks **203, 205, 207**). The second data is associated with adjacent portions of the subterranean formation **106.** The method may include using a controller **160** above the subterranean formation **106** to receive the first data including the at least one first time marker, recover the second data, and synchronize the second data based upon the at least one second time marker and the at least one first time marker. (Blocks **209, 211**).

Referring now to FIG 4, at the controller **160,** the at least one first time marker may be used to generate a table **310** comprising first time values. The first time values illustratively include values **311, 312,** which are aligned with received respective first time markers A, B. The tool assembly **100** may generate a table **320** including second time values. The second time values illustratively include values **321, 322,** which are aligned with transmission of the respective first time markers A, B. Once the controller **160** has synchronized the second data and the first data, the controller may generate table **330,** which includes the second data, i.e. the LWD measurement data, with reconstructed time values from the first time values. As shown in FIG. 4, the shaded time cells (552-600) indicate time when the tool assembly **100** is without power. Accordingly, the tool assembly **100** time table **320** shows that the time values reset (because the local clock in the tool assembly reset) during this power cycle.

Another aspect is directed to a tool assembly **100** in communication with a controller **160.** The tool assembly **100** may comprise a processor **107** and memory **103** cooperating therewith to send first data including at least one first time marker, and store second data including at least one second time marker related to the at least one first time marker. The controller **160** may receive the first data including the at least one first time marker, recover the second data, and synchronize the second data based upon the at least one second time marker and the at least one first time marker.

Another aspect is directed to a system **110.** The system **110** includes a tool assembly **100** to send first data including at least one first time marker, and store second data including at least one second time marker related to the at least one first time marker. The system **110** comprises a controller **160** communicating with the tool assembly **100** and to receive the first data including the at least one first time marker, recover the second data, and synchronize the second data based upon the at least one second time marker and the at least one first time marker.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A well-logging system comprising:
a tool assembly to be positioned within a borehole of a subterranean formation and to store second data including at least one second time marker related to at least one first time marker; and
a controller above the subterranean formation and to
process first data including the at least one first time marker,
recover the second data, and
synchronize the second data based upon the at least one second time marker and the at least one first time marker.

2. The well-logging system of claim 1 wherein said tool assembly sends the first data to said controller; and wherein said controller generates a first time value when the at least one first time marker is received.

3. The well-logging system of claim 2 wherein said tool assembly generates a second time value when the at least one first time marker is sent; and wherein said controller synchronizes the second data by time aligning the first time value with the second time value.

4. The well-logging system of claim 3 wherein said tool assembly stores the second time value along with the stored second data.

5. The well-logging system of claim 3 wherein said tool assembly maintains a local clock to generate the second time value, and resets the local clock periodically.

6. The well-logging system of claim 2 wherein said tool assembly sends the at least one first time marker during a power-up procedure.

7. The well-logging system of claim 2 wherein said tool assembly sends the at least one first time marker on a frame-by-frame basis.

8. A method for well-logging comprising:
positioning a tool assembly within a borehole of a subterranean formation;
using the tool assembly to store second data including at least one second time marker related to at least one first time marker; and
using a controller above the subterranean formation to process first data including the at least one first time marker, recover the second data, and synchronize the second data based upon the at least one second time marker and the at least one first time marker.

9. The method of claim 8 further comprising:
using the tool assembly to send the first data; and
using the controller to generate a first time value when the at least one first time marker is received.

10. The method of claim 9 further comprising:

11. using the tool assembly to generate a second time value when the at least one first time marker is sent; and using the controller to synchronize the second data by time aligning the first time value with the second time value.
